# EUROPÄISCHE PATENTSCHRIFT

(11) **EP 0 960 464 B1**
(45) Veröffentlichungstag und Bekanntmachung des Hinweises auf die Patenterteilung: **22.05.2002**
(21) Anmeldenummer: 98901929.4
(22) Anmeldetag: 02.01.1998
(51) Int. Cl.: H02K 11/04

(54) **ELEKTRISCHE MASCHINE, VORZUGSWEISE DREHSTROMGENERATOR MIT GLEICHRICHTER-BAUEINHEIT**
ELECTRIC MACHINE, PREFERABLY A THREE-PHASE GENERATOR WITH RECTIFIER UNIT
MACHINE ELECTRIQUE, DE PREFERENCE GENERATEUR A COURANT TRIPHASE, AVEC REDRESSEUR

(30) Priorität: 12.02.1997 DE 19705228
(43) Veröffentlichungstag der Anmeldung: 01.12.1999
(73) Patentinhaber: ROBERT BOSCH GMBH, 70442 Stuttgart (DE)
(72) Erfinder: PFLÜGER, Gerhard, D-71706 Markgröningen (DE); BOLZ, Ludwig, D-71334 Waiblingen (DE); KNAPPENBERGER, Uwe, D-75417 Mühlacker (DE); BILSING, Thomas, D-74357 Boennigheim (DE)
(86) Internationale Anmeldenummer: DE9800003
(87) Internationale Veröffentlichungsnummer: WO9836486

(56) Entgegenhaltungen:
- EP-A- 0 440 395
- DE-A- 2 001 273
- US-A- 5 451 823

## Beschreibung

### Stand der Technik

Die Erfindung geht aus von einer elektrischen Maschine, vorzugsweise einem Drehstromgenerator mit einer Gleichrichter-Baueinheit nach dem Oberbegriff des Patentanspruchs 1.

Bei einer bekannten, derartigen Lösung (US-PS 5,451,823) sind die PLUS-bzw. MINUS-Dioden einer Gleichrichter-Baueinheit jeweils auf einem Kühlkörper befestigt und mit einem Anschluß mit ihm elektrisch verbunden. Die Kühlkörper sind sandwichartig mit einer zwischengefügten Isolierplatte auf die Stirnfläche eines Lagerschildes für einen Drehstromgenerator befestigt. Der untere Kühlkörper wird dabei elektrisch- und wärmeleitend auf die Stirnfläche des Lagerschildes aufgesetzt. Auf dem oberen Kühlkörper befindet sich eine Schaltplatine, welche eine Anzahl im Kunststoff der Schaltplatine eingebettete Stromschienen für den Anschluß je einer Plus-Diode und einer Minus-Diode einerseits und den Wicklungsenden der Drehstromwicklung im Ständer des Drehstromgenerators andererseits aufweist. Diese Gleichrichter-Baueinheit wird durch Nieten zusammengehalten und mittels Schrauben am Drehstromgenerator befestigt. Zur Kühlung des oberen bogenförmig ausgebildeten Kühlkörpers ist dieser im Bereich seines Innenumfangs mit einer Vielzahl nebeneinander angeordneter Kühlschlitze versehen, welche axial zur Achse der elektrischen Maschine ausgerichtet sind und durch die ein axialer Kühlluftstrom stirnseitig von außen hindurch zu einem am Rotor des Generators befestigten Lüfter eingesogen wird. Die Kühlluft wird vom Lüfter in bekannter Weise durch Schlitze am Außenumfang des Lagerschildes radial nach außen geblasen.

Bei dieser bekannten Lösung ist nachteilig, daß die für das Durchströmen der Kühlluft vorgesehen Öffnungen im oberen Kühlkörper der Gleichreichter-Baueinheit relativ kleine Kühlflächen zur Wärmeabführung haben, so daß ein relativ dicker oberer Kühlkörper benötigt wird, um an den Kühlluft-Öffnungen eine ausreichende Kühlfläche zu bekommen. Durch die so erforderliche Materialanhäufung ist der hier verwendete obere Kühlkörper entsprechend teuer und schwer. Außerdem sind zur Erzielung einer großen Kühlfläche für den Kühlluftstrom die Öffnungen im Kühlkörper als schmale, radial verlaufende Schlitze ausgebildet, welche wiederum für den Kühlluftstrom einen relativ hohen Luftwiderstand darstellen. Dadurch ist das durch diese Schlitze angesaugte Luftvolumen und somit auch die Kühlwirkung nur gering. Die Verwendung leistungsstärkerer Lüfter führt zu höherem Aufwand und zu erhöhten Strömungsgeräuschen.

Mit der vorliegenden Lösung wird angestrebt, die Kühlleistung durch eine Umgestaltung der Gleichrichter-Baueinheit zu verbessern.

### Vorteile der Erfindung

Die erfindungsgemäße elektrische Maschine mit den kennzeichnenden Merkmalen des Hauptanspruchs, hat den Vorteil, daß durch die Anformung von axial verlaufenden Kühlrippen an den Öffnungen des oberen Kühlkörpers der Kühlluftstrom eine erheblich größere Kühlfläche des Kühlkörpers erfaßt, ohne daß dadurch der Strömungswiderstand erhöht wird. Daraus ergibt sich als weiterer Vorteil, daß die Kühlluftöffnungen nicht mehr schlitzförmig sondern wesentlich größer ausgebildet werden können, so daß der Luftdurchsatz unabhängig von dem jeweiligen Lüfter vergrößert und damit die Wärmeabführung von der Gleichrichter-Baueinheit verbessert und das Strömungsgeräusch verringert wird. Darüber hinaus kann der obere Kühlkörper dünner ausgebildet werden, was zu einer erheblichen Materialeinsparung führt.

Durch die in den Unteransprüchen aufgeführten Maßnahmen ergeben sich vorteilhafte Weiterbildungen und Verbesserungen der im Hauptanspruch angegebenen Merkmale. Dabei ist es besonders vorteilhaft, wenn zwischen dem oberen Kühlkörper und der Schaltungsplatine ein Abstand besteht, der an der Vorderseite des Kühlkörpers einen Luftspalt für einen radialen Kühlluftstrom vom Außenumfang des oberen Kühlkörpers bis zu einigen seiner Kühlluftöffnungen am inneren Umfangsbereich bildet. Ebenso vorteilhaft ist es, wenn statt dessen zwischen dem oberen Kühlkörper und der auf dem unteren Kühlkörper angeordneten Isolierplatte ein Abstand besteht, der an der Rückseite des oberen Kühlkörpers einen Luftspalt für einen weiteren radialen Kühlluftstrom vom Außenumfang des oberen Kühlkörpers bis mindestens zum inneren Umfangsbereich des unteren Kühlkörpers bildet. Eine optimale Kühlwirkung am oberen Kühlkörper wird schließlich dadurch erzielt, daß der obere Kühlkörper beidseitig einem Kühlluftstrom ausgesetzt ist, indem ein erster radialer Kühlluftstrom zwischen dem oberen Kühlkörper und der davor liegenden Schaltungsplatine sowie ein weiterer radialer Kühlluftstrom zwischen dem oberen Kühlkörper und der dahinterliegenden Isolierplatte von außen radial nach innen zum Lüfter geleitet wird.

### Zeichnung

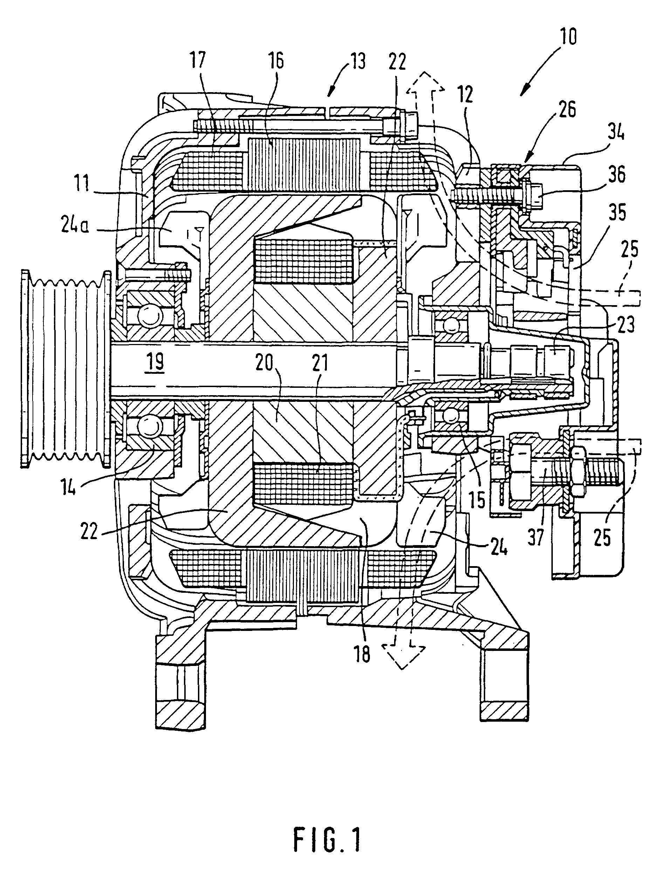

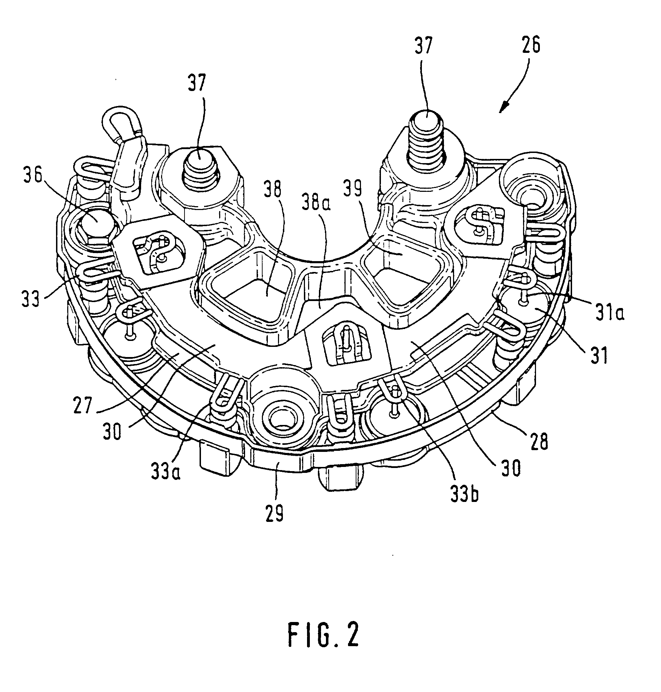

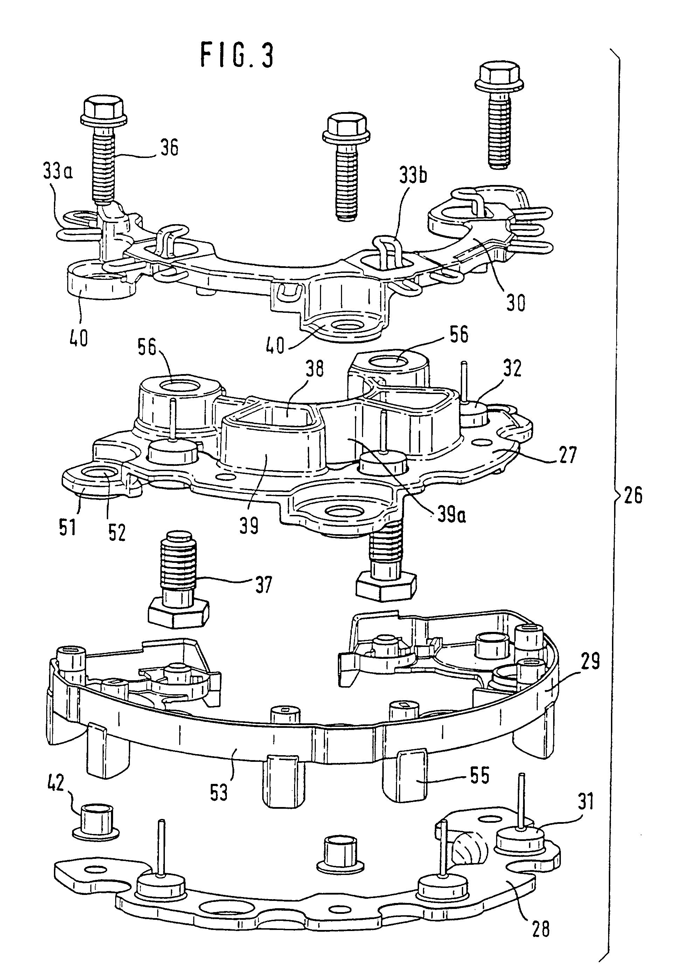

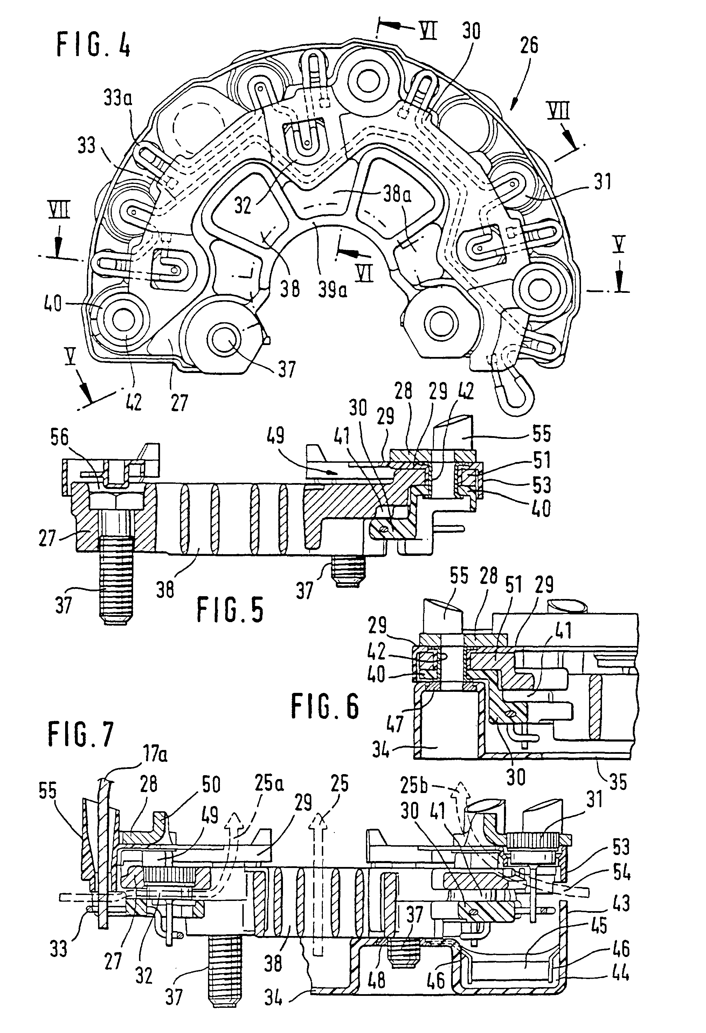

Ein Ausführungsbeispiel der Erfindung ist in der Zeichnung dargestellt und in der nachfolgenden Beschreibung näher erläutert. Es zeigen Figur 1 einen Drehstromgenerator mit einer Gleichrichter-Baueinheit am hinteren Lagerschild, im Längsschnitt, Figur 2 zeigt die erfindungsgemäße Gleichrichter-Baueinheit in raumbildlicher Darstellung, Figur 3 die einzelnen Baugruppen der Gleichrichter-Einheit aus Figur 2 vor dem Zusammenbau, raumbildlich dargestellt, Figur 4 zeigt die Gleichrichter-Baueinheit in der Vorderansicht und die Figuren 5 bis 7 zeigen Schnittdarstellungen der Gleichrichter-Baueinheit aus Figur 4.

### Beschreibung des Ausführungsbeispiels

In Figur 1 ist ein Drehstromgenerator für Kraftfahrzeuge mit 10 bezeichnet. Er hat ein aus zwei Schalenhälften 11, 12 bestehendes Druckgußgehäuse 13, wobei die vordere Schalenhälfte 11 als Lagerschild für ein Antriebslager 14 und die hintere Schalenhälfte 12 als Lagerschild für ein schwächer ausgebildetes Kugellager 15 ausgebildet ist. Die beiden Schalenhälften des Gehäuses 13 fixieren ein Ständerblechpaket 16, welches in bekannter Weise eine dreiphasige Ständerwicklung 17 zur Erzeugung des Drehstromes aufnimmt. In der sogenannten Ständerbohrung des Ständerblechpakets ist ein Klauenpolläufer 18 angeordnet, der mit seiner Läuferwelle 19 in den Schalenhälften 11, 12, des Gehäuses 13 gelagert ist. Die Läuferwelle 19 trägt im mittleren Bereich einen magnetisch leitenden Ringkern 20, auf dem eine Erregerwicklung 21 angeordnet ist. Beidseitig dazu ist jeweils eine Klauenpolplatine 22 auf der Läuferwelle 19 befestigt, deren Klauenpolfinger zur Bildung eines Wechselfeldes mit Abstand ineinandergreifen. Zur Stromversorgung der Erregerwicklung 21 ist am hinteren Ende der Läuferwelle 19 eine Schleifringanordnung 23 befestigt, von der je ein Schleifring mit einem Ende der Erregerwicklung 21 elektrisch verbunden ist. Die Schleifringe wirken in bekannter Weise mit einer nicht dargestellten Kohlebürstenvorrichtung zusammen, in der ein Regler intergriert ist, mit dem der Strom in der Erregerwicklung entsprechend dem Bedarf im Bordnetz des Kraftfahrzeugs geregelt wird. Auf der Innenseite der hinteren Schalenhälfte 11 ist ein Lüfter 24 an der Stirnseite der Klauenpolplatine 22 befestigt, der durch entsprechende Schlitze an der Stirnseite der Schalenhälfte 11 einen Kühlluftstrom 25 axial ansaugt und radial an den hinteren Wickelkopf der Ständerwicklung 17 vorbei durch außenliegende Schlitze der hinteren Schalenhälfte radial nach außen bläst. Ein zweiter Lüfter 24a befindet sich an der Stirnseite der vorderen Klauenpolplatine 22 im Inneren der vorderen Schalenhälfte 11, um auch hier einen Kühlluftstrom axial durch Schlitze der Gehäusehälfte 11 anzusaugen und am vorderen Wickelkopf der Ständerwicklung 17 vorbei durch außenliegende Gehäuseschlitze radial nach außen zu blasen. In dem vom hinteren Lüfter 24 axial angesaugten Kühlluftstrom 25 befindet sich an der äußeren Stirnseite der hinteren Schalenhälfte 12 eine Gleichrichter-Baueinheit 26, die mit den Wicklungsausgängen des Ständerwicklung 17 zur Gleichrichtung des dort induzierten Drehstromes in bekannter Weise eingangsseitig verschaltet ist. Am Ausgang der Gleichrichter-Baueinheit 26 ist in bekannter Weise die zur Versorgung des Kraftfahrzeug-Bordnetzes benötigte Gleichspannung abzugreifen.

Einzelheiten der Gleichrichter-Baueinheit 26 sind in den Figuren 2 bis 7 erkennbar. So besteht die Gleichrichter-Baueinheit 26 aus einem plattenförmigen Pluskühlkörper 27 und einem Minuskühlkörper 28 aus wärmeleitendem Metall, vorzugsweise Aluminium. Die beiden übereinanderliegenden Kühlkörper 27, 28 sind voneinander durch eine Isolierplatte 29 elektrisch isoliert und zusammen mit einer auf dem oberen Kühlkörper 27 angeordneten Schaltungsplatine 30 sandwichartig an dem Stirnbereich des die hintere Schalenhälfte 12 bildenden Lagerschildes der Maschine befestigt. In dem Minuskühlkörper 27 sind mehrere Minus-Dioden 31 in vorzugsweise geriffelten Bohrungen mit ihrem Anodenanschluß eingepreßt, wobei der Minuskühlkörper 28 zur Ableitung der Verlustwärme von den Minus-Dioden 31 flächig an der Stirnseite der hinteren Schalenhälfte 12 zu befestigen ist. In gleicher Weise sind im Pluskühlkörper 27 mehrere Plus-Dioden 32 kathodenseitig eingepreßt. Die Reihenschaltung je einer Minus-Diode 31 mit einer Plus-Diode 32 sowie deren Verschaltung mit einem Ende der Ständerwicklung 17 erfolgt über Leitungsdrähte 33, die in der Schaltungsplatine 30 mit Ausnahme ihrer Anschlußenden 33a im Kunststoff eingebettet sind. Die Gleichrichter-Baueinheit 26 wird nach außen durch eine Schutzkappe 34 aus Kunststoff abgedeckt, welche jedoch zum Eintritt des Kühlluftstromes 25 mit entsprechend stirnseitig angeordneten Öffnungen 35 versehen ist. Schaltungsplatine 30, Pluskühlkörper 27, Isolierplatte 29 und Minuskühlkörper 28 werden übereinanderliegend durch Befestigungsschrauben 36 an der Stirnseite der hinteren Schalenhälfte 12 festgeschraubt. Die Schutzkappe 34 wird ferner durch Anschlußschrauben 37 am Pluskühlkörper 27 befestigt.

Die Verlustwärme der Gleichrichter-Baueinheit 26 wird einerseits über eine wärmeleitende Auflage des unteren Minuskühlkörpers 28 am Lagerschild der hinteren Gehäusehälfte 12 und andererseits über den Kühlluftstrom 25 des Lüfters 24 vom oberen Pluskühlkörper 27 abgeführt, indem dieser obere Pluskühlkörper mehrere nebeneinander am inneren Umfangsbereich angeordnete Kühlluftöffnungen 38 für einen axialen Durchtritt des Kühlluftstromes 25 aufweist. Zur Erzielung einer möglichst guten Ableitung der Verlustwärme aus dem Pluskühlkörper 27 an den Kühlluftstrom 25 sind dort an den Kühlluftöffnungen 38 axial ausgerichtete Kühlrippen 39 angeformt. Durch diese Kühlrippen wird die dem Kühlluftstrom 25 ausgesetzte Oberfläche des Pluskühlkörpers 27 stark vergrößert. Damit können auch die Kühlluftöffnungen 38 vergrößert und als Folge davon auch der durch diese Kühlluftöffnungen 38 strömende Anteil des Kühlluftstromes 25 erhöht werden. Gegenüber den bekannten Ausführungen läßt sich damit die Anzahl der Kühlluftöffnungen und die Luftströmungsgeräusche herabsetzen.

Zur weiteren Verbesserung der Wärmeabführung am Pluskühlkörper 27 ist zwischen diesem oberen Kühlkörper und der Schaltungsplatine 30 durch entsprechend geformte als Abstandhalter ausgebildete Füße 40 der Schaltungsplatine 30 ein Abstand vorgesehen, welcher einen Luftspalt 41 für einen radialen Kühlluftstromanteil 25a vom Außenumfang des oberen Kühlkörpers 27 bis zu mehreren Kühlluftöffnungen 38a am inneren Umfangsbereich bildet, wobei die Kühlluftöffnungen 38a in diesem Bereich keine Kühlrippen aufweisen. Für die axial einströmende Kühlluft des Kühlluftstroms 25 einerseits und für den radial fließenden Kühlluftstromanteil 25a andererseits läßt sich der Strömungswiderstand dadurch niedrig halten, daß abwechselnd an den Kühlluftöffnungen 38 umlaufende Kühlrippen 39 und an den dazwischenliegenden Kühlluftöffnungen 38a nur am Innenumfang des Kühlkörpers 27 axial verlaufende Kühlrippen 39a angeformt sind, so daß der radiale Kühlluftstromanteil 25a durch diese Kühlluftöffnungen 38a ungehindert zum Lüfter 24 gelangen kann. Die an der Schaltungsplatine 30 angeformten Füße 40 sind mit Bohrungen versehen, in welche Niethülsen 42 eingesetzt sind, durch die die Schaltungsplatine 30 mit dem oberen Pluskühlkörper 27 und der Isolierplatte 29 zu einer Einheit vormontiert werden, wobei die aus dem Isolierstoff der Schaltungsplatine 30 geformten Füße 40 als Abstandshalter für den Abstand zwischen oberem Pluskühlkörper 27 und Schaltungsplatine 30 dienen. Die Anschlußenden 33a der Leitungsdrähte 33 in der Schaltungsplatine 30 für den Anschluß der in Figur 7 angedeuteten Ständerwicklungsenden 17a sind vom äußeren Rand der Schaltungsplatine 30 weg radial nach außen ausgerichtet. Ebenso sind die Anschlußenden 33b der Leitungsdrähte 33 zum Anschluß der Kopfdrähte 31a der Minus-Dioden 31 vom äußeren Rand der Schaltungsplatine 30 weg radial nach außen ausgerichtet. Zum Schutz dieser Anschlüsse ist - wie Figur 7 zeigt - die Schutzkappe 34 mit einem außen angeformten Kragen 43 abgedeckt. In einer Ausformung 44 der Schutzkappe 34 ist ein Entstörkondensator 45 der Maschine vergossen, der über Anschlußleiter 46, welche im Isolierstoff der Schutzkappe 30 eingebettet sind, einerseits über eine Kontaktplatte 47 (Figur 6) und einer Befestigungsschraube 36 mit dem Lagerschild der hinteren Schalenhälfte 12 als Masse elektrisch verbunden ist und andererseits über eine in der Schutzkappe 34 verankerte Kontaktscheibe 48 mit der Anschlußschraube 37 für den Plus-Anschluß des Generators in Verbindung steht.

Eine verbesserte Abführung der Verlustwärme von dem oberen Pluskühlkörper 27 wird ferner dadurch erreicht, daß zwischen dem oberen Pluskühlkörper 27 und der auf dem unteren Minuskühlkörper 28 angeordneten Isolierplatte 29 ein Abstand gebildet wird, der einen weiteren Luftspalt 49 für einen weiteren radial von außen nach innen fließenden Kühlluftstromanteil 25b bildet (Figur 7). Dieser Luftspalt 49 verläuft vom Außenumfang des oberen Pluskühlkörpers 27 bis zum inneren Umfangsbereich des unteren Minuskühlkörpers 28, so daß ein Kühlluftstromanteil 25b von dort aus an einem nach innen gerichteten Ringabschnitt 50 am Innenumfang des unteren Minuskühlkörpers 28 vorbeistreicht, um zum Lüfter 24 zu gelangen. Zur Herstellung dieses Luftspaltes 49 sind nunmehr am Außenumfang des Pluskühlkörpers 27 im Bereich der Befestigungsschrauben 36 Füße ausgebildet, die als Abstandshalter 51 dienen. Diese Abstandshalter 51 liegen unterhalb der Füße 40 an der Schaltungsplatine 30. Die Befestigungsbohrungen 52 in diesen Abstandshaltern 51 sind so groß dimensioniert, daß jeweils ein kragenförmiger Ansatz an der Isolierplatte 29 dort eingreift und die elektrische Isolierung des Pluskühlkörpers 27 zur Niethülse 42 sicherstellt. Am Außenumfang der Isolierstoffplatte 29 ist ein weiterer Kragen 53 angeformt, der mit radialem Abstand zum oberen Pluskühlkörper 27 hin gerichtet ist. Dieser Kragen 53 an der Isolierplatte 29 zwischen Plus- und Minuskühlkörper 27, 28 bildet mit dem auf gleichem Umfang liegenden Kragen 43 der Schutzkappe 34 einen axial begrenzten Ringspalt 54 (Figur 7) für den Eintritt der beiden Teil-Kühlluftströme 25a und 25b, die den oberen Pluskühlkörper 27 zu beiden Seiten von außen nach innen strömend umspülen, bevor sie gemeinsam mit dem axialen Kühlluftstrom 25 zum Lüfter 24 gelangen.

Zur besseren Zuführung der Ständerwicklungsenden 17a zu den Anschlußenden 33a der Leitungsdrähte 33 in der Schaltungsplatine 30 sind im äußeren Umfangsbereich an der Isolierplatte 29 entsprechend positionierte, axial ausgerichtete Aufnahme- und Führungshülsen 55 angeformt.

Für die verschiedenen fahrzeugspezifischen Anschlußmöglichkeiten des Bordnetzes ist der obere Pluskühlkörper 27 mit zwei einander gegenüberliegenden Anschlußlöchern 56 zur verdrehfesten Aufnahme von zwei Plus-Anschlußschrauben 37 versehen (Figur 3).

Die Erfindung ist nicht auf das beschriebene und dargestellte Ausführungsbeispiel beschränkt, da die Gestaltung der Kühlluftöffnungen im oberen Kühlkörper zur Wärmeableitung an den Kühlluftstrom ebenso den jeweiligen Gegebenheiten anzupassen sind, wie die dort angeformten Längsrippen zur Vergrößerung der Oberflächen für die Wärmeabführung an die Kühlluft. Außerdem ist je nach den räumlichen Gegebenheiten und der vom oberen Kühlkörper abzuführende Größe der Verlustleistung eine radiale Umspülung mehr oder weniger erforderlich, so daß ggf. auf einen der beiden Luftspalte 41 bzw. 49 zwischen oberen Kühlkörper und Schaltungsplatine bzw. oberem Kühlkörper und Isolierplatte oder gar auf beide Luftspalte verzichtet werden kann. Da diese radialen Kühlluftströme 25a und b jedoch unmittelbar die Plus- und Minus-Dioden 31, 32 umströmen, in denen die abzuführende Verlustwärme entsteht, sind die hierfür vorgesehenen Luftspalte 41 und 49 besonders wirkungsvoll. Die Wärmeleitwege in den Kühlkörpern bis zur Kühlluft sind dabei so kurz, daß auch Dioden mit größerer Leistung (bis zu 150 A) einsetzbar sind. Die direkte thermische Ankopplung des Minuskühlkörpers 28 an das hintere Lagerschild und seine konstruktive Ausführung mit der direkten Kühlluft an den Minusdioden 31 im hinteren Luftspalt 49 ermöglicht ebenfalls die Verwendung von Dioden größerer Leistung (bis zu 150 A). Dadurch wird eine höhere Standardisierung der Gleichrichter-Baueinheit realisierbar.

Ein ausreichender Isolier- und Korrosionsschutz wird durch die räumlichen Abstände der Plus- und Minus-Potential führenden Teile gewährleistet. Durch den zusätzlichen radialen Kühlluftstromanteil 25a, 25b wird zudem ein Ansammeln bzw. Ablagern von korrosiven Produkten verhindert.

## Patentansprüche

1. Elektrische Maschine, vorzugsweise Drehstromgenerator, mit einem Gehäuse, einem im Gehäuse drehbar gelagerten Läufer mit mindestens einem im Gehäuse angeordneten Lüfter, mit einer Gleichrichter-Baueinheit, deren Plus- bzw. Minus-Dioden an einem Plus- bzw. Minus-Kühlkörper angebracht sind, die voneinander durch eine Isolierplatte elektrisch isoliert und zusammen mit einer Schaltungsplatine für die Diodenanschlüsse sandwichartig an einem Stirnbereich eines Lagerschildes der Maschine befestigt sind, wobei die Verlustwärme der Gleichrichter-Baueinheit einerseits über eine wärmeleitende Anlage des unteren Kühlkörpers am Lagerschild und andererseits über mindestens einen Ansaug-Kühlluftstrom des Lüfters vom oberen Kühlkörper abzuführen ist, indem dieser obere Kühlkörper mehrere, nebeneinander im inneren Umfangsbereich angeordnete Kühlluftöffnungen für einen axialen Durchtritt des Kühlluftstromes aufweist, **dadurch gekennzeichnet, daß** an mindestens einigen Kühlluftöffnungen (38) des oberen Kühlkörpers (27) axiale Kühlrippen (39) am Kühlkörper (27) angeformt sind.

2. Gleichrichter-Baueinheit, deren Plus- bzw. Minus-Dioden an einem Plus- bzw. Minus-Kühlkörper angebracht sind, die voneinander durch eine Isolierplatte elektrisch isoliert und zusammen mit einer Schaltungsplatine für die Diodenanschlüsse sandwichartig an einem Stirnbereich des Lagerschildes eines Drehstromgenerators zu befestigen sind, wobei die Verlustwärme der Gleichrichter-Baueinheit einerseits über eine wärmeleitende Anlage des unteren Kühlkörpers am Lagerschild der Maschine und andererseits über mindestens einen Kühlluftstrom eines Lüfters der Maschine vom oberen Kühlkörper abzuführen ist, indem dieser obere Kühlkörper mehrere, nebeneinander am Innenumfang angeordnete Kühlluftöffnungen für einen axialen Durchtritt des Kühlluftstromes aufweist, **dadurch gekennzeichnet, daß** an mindestens einigen Kühlluftöffnungen (28) des oberen Kühlkörpers (27) axiale Kühlrippen (39) am Kühlkörper (27) angeformt sind.

3. Gleichrichter-Baueinheit nach Anspruch 1 oder 2, **dadurch gekennzeichnet, daß** zwischen dem oberen Kühlkörper (27) und der Schaltungsplatine (30) ein Abstand besteht, der einen Luftspalt (41) für einen radialen Kühlluftstrom (35a) vom Außenumfang des oberen Kühlkörpers (27) bis zu einigen seiner Kühlluftöffnungen (38a) am inneren Umfangsbereich bildet.

4. Gleichrichter-Baueinheit nach Anspruch 3, **dadurch gekennzeichnet, daß** abwechselnd an den einen Kühlluftöffnungen (38) umlaufende Kühlrippen (39) und an den anderen Kühlluftöffnungen (38a) lediglich am Innenumfang des Kühlkörpers (27) verlaufende axiale Kühlrippen (39a) angeformt sind, so daß der radiale Kühlluftstrom (25a) durch diese letzteren Kühlluftöffnungen (38a) zum Lüfter (24) gelangen kann.

5. Gleichrichter-Baueinheit nach einem der vorherigen Ansprüche, **dadurch gekennzeichnet, daß** der Abstand zwischen dem oberen Kühlkörper (27) und der Schaltungsplatine (30) durch auf dem oberen Kühlkörper (27) aufliegende Abstandshalter (40) gebildet ist, welche am Isolierstoff der Schaltungsplatine (30) angeformt sind.

6. Gleichrichter-Baueinheit nach einem der vorherigen Ansprüche, **dadurch gekennzeichnet, daß** die Schaltungsplatine (30) von einer Schutzkappe (34) abgedeckt ist, die mit Öffnungen (35) zum Eintritt des Kühlluftstromes (25) versehen ist und mit einem außen angeformten Kragen (43) radial ausgerichtete Anschlüsse (33a, 33b) der Schaltungsplatine (30) für die Minus-Dioden (31) und für Wicklungsenden (17a) der Maschine abdeckt.

7. Gleichrichter-Baueinheit nach Anspruch 6, **dadurch gekennzeichnet, daß** die Schutzkappe (34) mit einer Ausformung (44) versehen ist, in die ein Entstörkondensator (45) der Maschine eingesetzt ist, der über in der Schutzkappe (34) integrierte Anschlußleiter (46) einerseits mit dem Lagerschild der Maschine elektrisch zu verbinden ist und andererseits mit einem Hauptanschluß (Plusklemme 37) der Gleichrichter-Baueinheit (26) in Verbindung steht.

8. Gleichrichter-Baueinheit nach Anspruch 2 oder 3, **dadurch gekennzeichnet, daß** zwischen dem oberen Kühlkörper (27) und der auf dem unteren Kühlkörper (28) angeordneten Isolierplatte (29) ein Abstand besteht, der einen Luftspalt (49) für einen weiteren radialen Kühlluftstrom (25b) vom Außenumfang des oberen Kühlkörpers (27) bis mindestens zum inneren Umfangsbereich des unteren Kühlkörpers (28) bildet.

9. Gleichrichter-Baueinheit nach Anspruch 7, **dadurch gekennzeichnet, daß** am oberen Kühlkörper (27) zur Isolierplatte (29) hin gerichtete Abstandshalter (51) zur Bildung des Luftspaltes (49) angeformt sind.

10. Gleichrichter-Baueinheit nach Anspruch 9, **dadurch gekennzeichnet, daß** am Außenumfang der Isolierplatte (29) ein Kragen (53) angeformt ist, der zum oberen Kühlkörper (27) hin gerichtet ist.

11. Gleichrichter-Baueinheit nach Anspruch 10, **dadurch gekennzeichnet, daß** zwischen dem an der Schutzkappe (34) außen angeformten Kragen (43) und dem an der Isolierplatte (29) außen angeformten Kragen (53) ein axialer Ringspalt (54) für den Eintritt des Kühlluftstromanteiles (25a, 25b) gebildet ist.

12. Gleichrichter-Baueinheit nach Anspruch 8, **dadurch gekennzeichnet, daß** der obere Kühlkörper (27) beidseitig einem Kühlluftstrom (25a, 25b) ausgesetzt ist, indem ein erster radialer Kühlluftstrom (25a) zwischen dem oberen Kühlkörper (27) und der davor liegenden Schaltungsplatine (30) und ein weiterer radialer Kühlluftstrom (25b) zwischen dem oberen Kühlkörper und der dahinterliegenden Isolierplatte (29) von außen nach innen zum Lüfter (24) verläuft.

13. Gleichrichter-Baueinheit nach einem der vorherigen Ansprüche, **dadurch gekennzeichnet, daß** im äußeren Umfangsbereich der Isolierplatte (29) axial ausgerichtete Aufnahmeund Führungshülsen (55) für die Ständerwicklungsenden (17a) angeformt sind.

14. Gleichrichter-Baueinheit nach einem der vorherigen Ansprüche, **dadurch gekennzeichnet, daß** der obere Kühlkörper (27) die Plus-Dioden (32) trägt und mit zwei einander gegenüberliegenden Anschlußlöchern (56) zur verdrehfesten Aufnahme von zwei Plus-Anschlußschrauben (37) versehen ist.

## Claims

1. Electrical machine, preferably a three-phase alternator, having a housing, a rotor which is mounted in the housing such that it can rotate and has at least one fan arranged in the housing, having a rectifier unit whose positive and negative diodes are fitted, respectively, to a positive and negative heat sink, which heat sinks are electrically insulated from one another by means of an insulating panel and are mounted, together with a circuit board for the diode connections, like a sandwich on an end region of a bearing plate of the machine, in which case the heat losses from the rectifier unit can be dissipated firstly via a thermally conductive contact between the lower heat sink and the bearing plate and secondly via at least one induction cooling air flow of the fan from the upper heat sink, in that this upper heat sink has a number of cooling air openings, which are arranged alongside one another in the inner circumferential region, for cooling air to flow through axially, **characterized in that** axial cooling ribs (39) are integrally formed on the heat sink (27) on at least some of the cooling air openings (38) in said upper heat sink (27).

2. Rectifier unit, whose positive and negative diodes are respectively fitted to a positive and negative heat sink, which heat sinks are electrically insulated from one another by means of an insulating panel and can be mounted together with a circuit board for the diode connections like a sandwich on an end region of the bearing plate of a three-phase alternator, in which case the heat losses from the rectifier unit can be dissipated firstly via a thermally conductive contact between the lower heat sink and the bearing plate of the machine and secondly via at least one cooling air flow of a fan of the machine from the upper heat sink, in that this upper heat sink has a number of cooling air openings, which are arranged alongside one another on the inner circumference, for cooling air to flow through axially, **characterized in that** axial cooling ribs (39) are integrally formed on the heat sink (27) on at least some of the cooling air openings (28) in said upper heat sink (27).

3. Rectifier unit according to Claim 1 or 2, **characterized in that** there is a gap between the upper heat sink (27) and the circuit board (30), which gap forms an air gap (41) for a radial cooling air flow (35a) from the outer circumference of the upper heat sink (27) to a number of its cooling air openings (38a) on the inner circumferential region.

4. Rectifier unit according to Claim 3, **characterized in that**, alternately, circumferential cooling ribs (39) are integrally formed on the one set of cooling air openings (38) and axial cooling ribs (39a) which run only in the inner circumference of the heat sink (27) are integrally formed on the other set of cooling air openings (38a), so that the radial cooling air flow (25a) can reach the fan (24) through these latter cooling air openings (38a).

5. Rectifier unit according to one of the preceding claims, **characterized in that** the gap between the upper heat sink (27) and the circuit board (30) is formed by spacers (40) which rest on the upper heat sink (27) and are integrally formed on the insulating material of the circuit board (30).

6. Rectifier unit according to one of the preceding claims, **characterized in that** the circuit board (30) is covered by a protective cap (34), which is provided with openings (35) for the entry of the cooling air flow (25) and which has an externally integrally formed collar (43) covering radially aligned connections (33a, 33b) of the circuit board (30) for the negative diodes (31) and for winding ends (17a) of the machine.

7. Rectifier unit according to Claim 6, **characterized in that** the protective cap (34) is provided with a recess (44) into which a suppression capacitor (45) of the machine is inserted, which suppression capacitor (45) can, firstly, be electrically connected to the bearing plate of the machine via connecting conductors (46) integrated in the protective cap (34) and, secondly, is connected to a main connection (positive terminal 37) of the rectifier unit (26).

8. Rectifier unit according to Claim 2 or 3, **characterized in that** there is a gap between the upper heat sink (27) and the insulating panel (29) which is arranged on the lower heat sink (28), which gap forms an air gap (49) for a further radial cooling air flow (25b) from the outer circumference of the upper heat sink (27) at least to the inner circumferential region of the lower heat sink (28).

9. Rectifier unit according to Claim 7, **characterized in that** spacers (51) which point towards the insulating panel (29) are integrally formed on the upper heat sink (27) in order to form the air gap (49).

10. Rectifier unit according to Claim 9, **characterized in that** a collar (53) which points towards the upper heat sink (27) is integrally formed on the outer circumference of the insulating panel (29).

11. Rectifier unit according to Claim 10, **characterized in that** an axial annular gap (54) for the entry of the cooling air flow element (25a, 25b) is formed between the collar (43) that is integrally formed externally on the protective cap (34) and the collar (53) which is integrally formed externally on the insulating panel (29).

12. Rectifier unit according to Claim 8, **characterized in that** the upper heat sink (27) has a cooling air flow (25a, 25b) applied to it on both sides, **in that** a first radial cooling air flow (25a) runs between the upper heat sink (27) and the circuit board (30) located in front of it, and a further radial cooling air flow (25b) runs between the upper heat sink and the insulating panel (29), which is located behind it, from the outside inwards, to the fan (24).

13. Rectifier unit according to one of the preceding claims, **characterized in that** axially aligned holding and guide sleeves (55) for the stator winding ends (17a) are integrally formed in the outer circumferential region of the insulating panel (29).

14. Rectifier unit according to one of the preceding claims, **characterized in that** the upper heat sink (27) is fitted with the positive diodes (32) and is provided with two mutually opposite connecting holes (56) for holding two positive connecting screws (37) such that no twisting can occur.

## Revendications

1. Machine électrique, notamment générateur de courant triphasé, composée d'un boîtier logeant un rotor et au moins un ventilateur, un ensemble redresseur dont les diodes positives et négatives sont montées sur un radiateur positif et négatif, en étant séparées électriquement par une plaque isolante et fixées en combinaison avec une platine de circuit pour les branchements des diodes suivant un montage en sandwich dans une zone frontale d'un panneau de palier de la machine,
la chaleur dégagée par les ensembles redresseurs étant évacuée à la fois par une installation conductrice de chaleur du radiateur inférieur vers le panneau de palier, et par au moins une veine d'air de refroidissement, aspirée par le ventilateur à partir du radiateur supérieur, comportant plusieurs orifices de passage d'air de refroidissement dans une zone périphérique pour le passage axial de la veine d'air de refroidissement,
**caractérisée en ce que**
des ailettes de refroidissement axiales (39) sont formées sur le corps de radiateur (27) au niveau d'au moins quelques orifices de passage d'air de refroidissement (38) du corps supérieur (27) du radiateur.

2. Ensemble redresseur dont les diodes positives et négatives sont montées sur un corps de radiateur positif et négatif en étant isolées électriquement par l'intermédiaire d'une plaque isolante, et qui, en combinaison avec une platine de circuit, sont fixées pour les branchements de diodes en sandwich dans une zone frontale du panneau de palier d'un générateur de courant alternatif,
- la chaleur dégagée par l'ensemble redresseur étant évacuée d'une part par une installation conductrice de chaleur du corps de radiateur inférieur du panneau de palier de la machine, et d'autre part par au moins un flux d'air de refroidissement d'un ventilateur de la machine, à partir du corps supérieur de radiateur, ce dernier comportant plusieurs orifices d'air de refroidissement, juxtaposés au niveau de la périphérie intérieure pour le passage axial de la veine d'air de refroidissement,
**caractérisé en ce que**
des ailettes de refroidissement, axiales (39) sont formées sur le corps de radiateur (27) au moins au niveau de quelques orifices d'air de refroidissement (28) du corps de radiateur supérieur (27).

3. Ensemble redresseur selon la revendication 1 ou 2,
**caractérisé en ce qu'**
entre le corps de radiateur supérieur (27) et la platine de circuit (30) il existe un intervalle qui forme un intervalle d'air (41) pour une veine d'air de refroidissement (35a), radiale, allant de la périphérie extérieure du corps supérieur de radiateur (27) jusqu'à quelques-uns de ses orifices d'air de refroidissement (38a) dans la zone périphérique intérieure.

4. Ensemble redresseur selon la revendication 3,
**caractérisé en ce que**
de manière alternée, certains orifices de passage d'air de refroidissement (38) comportent des ailettes de refroidissement périphériques (39), et les autres orifices de passage d'air de refroidissement (38a) comportent des ailettes de refroidissement axiales (39a) uniquement sur la périphérie intérieure du corps de radiateur (27), pour que la veine d'air de refroidissement radiale (25a) puisse arriver à travers ces derniers orifices d'air de refroidissement (38a) jusqu'au niveau du ventilateur (24).

5. Ensemble redresseur selon l'une quelconque des revendications précédentes,
**caractérisé en ce que**
la distance entre le corps supérieur de radiateur (27) et la platine de circuit (30) est définie par un organe d'écartement (40) appliqué sur le corps supérieur de radiateur (27), celui-ci étant formé dans la matière isolante de la platine de circuit (30).

6. Ensemble redresseur selon l'une quelconque des revendications précédentes,
**caractérisé en ce que**
la platine de circuit (30) est couverte par un couvercle (34) muni d'orifices (35) pour l'entrée de la veine d'air de refroidissement (25) et par une collerette (43), moulée extérieurement, avec des branchements (33a, 33b) dirigés radialement vers l'extérieur de la platine de circuit (30) pour les diodes négatives (31) et les extrémités d'enroulement (17a) de la machine.

7. Ensemble redresseur selon la revendication 6,
**caractérisé en ce que**
le couvercle (34) comporte une partie formée (44) logeant le condensateur de déparasitage (45) de la machine, ce condensateur étant relié électriquement par un conducteur de branchement (46) intégré au couvercle (34), d'une part au panneau de palier de la machine électrique et d'autre part à une borne principale (borne positive 37) de l'ensemble redresseur (26).

8. Ensemble redresseur selon l'une quelconque des revendications 2 ou 3,
**caractérisé par**
un intervalle formant un passage d'air (49) pour un autre flux d'air de refroidissement radial (25b) allant de la périphérie extérieure du corps supérieur de radiateur (27) jusqu' à au moins la zone périphérique intérieure du corps inférieur de radiateur (28), entre le corps supérieur de radiateur (27) et la plaque isolante (29) prévue sur le corps inférieur de radiateur (28).

9. Ensemble redresseur selon la revendication 7,
**caractérisé en ce que**
des organes d'écartement (51) sont réalisés sur le corps de radiateur supérieur (27), en direction de la plaque isolante (29) pour former le passage d'air (49).

10. Ensemble redresseur selon la revendication 9,
**caractérisé par**
une collerette (53) formée sur la périphérie extérieure de la plaque isolante (29), cette collerette étant dirigée vers le corps de radiateur supérieur (27).

11. Ensemble redresseur selon la revendication 10,
**caractérisé en ce qu'**
un intervalle annulaire axial (54) pour l'entrée de la partie de veine d'air de refroidissement (25a, 25b) est formé entre la collerette (43) réalisée extérieurement sur le couvercle (34) et la collerette (53) formée extérieurement sur la plaque isolante (29).

12. Ensemble redresseur selon la revendication 8,
**caractérisé en ce que**
le corps supérieur de radiateur (27) est exposé des deux côtés à une veine d'air de refroidissement (25a, 25b), et une première veine d'air de refroidissement radiale (25a) passe entre le corps supérieur de radiateur (27) et la platine de circuit (30) qui se trouve devant, tandis qu'une autre veine d'air de refroidissement radiale (25b) passe entre le corps de radiateur supérieur et la plaque isolante (29) située derrière, en passant de l'extérieur vers l'intérieur en direction du ventilateur (24).

13. Ensemble redresseur selon l'une quelconque des revendications précédentes,
**caractérisé par**
des manchons de réception et de guidage (55) formés dans la zone périphérique extérieure de la plaque isolante (29), ces manchons étant dirigés axialement pour recevoir les extrémités des enroulements de stator.

14. Ensemble redresseur selon l'une quelconque des revendications précédentes,
**caractérisé en ce que**
le corps supérieur de radiateur (27) portant les diodes positives (32) est muni de deux orifices de branchement opposés (56) pour recevoir de manière solidaire en rotation, deux vis de branchement positives (37).
